# EUROPEAN PATENT SPECIFICATION

(11) **EP 2 732 899 B1**
(45) Date of publication and mention of the grant of the patent: **03.04.2019**
(21) Application number: 13192415.1
(22) Date of filing: 12.11.2013
(51) Int. Cl.: B23K 1/005, B23K 1/00, B23K 1/19, H01R 4/02

(54) **APPARATUS AND TERMINAL, AND METHOD FOR SOLDERING A COPPER WIRE ON THE TERMINAL, PARTICULARLY FOR SOLDERING THE END OF THE WINDING WIRE OF ELECTRIC COILS ON A BRONZE TERMINAL**
VORRICHTUNG UND ANSCHLUSS, UND VERFAHREN ZUM LÖTEN EINES KUPFERDRAHTES AN DEN ANSCHLUSS, INSBESONDERE ZUM LÖTEN DES ENDES EINES WICKELDRAHTS VON ELEKTRISCHEN SPULEN AN EINEN BRONZEANSCHLUSS
DISPOSITIF ET TERMINAL, ET PROCÉDÉ PERMETTANT DE SOUDER UN FIL DE CUIVRE SUR LE TERMINAL, EN PARTICULIER POUR LE SOUDAGE DE L'EXTRÉMITÉ DU FIL D'ENROULEMENT DE BOBINES ÉLECTRIQUES SUR UN TERMINAL DE BRONZE

(30) Priority: 15.11.2012 IT MI20121938
(43) Date of publication of application: 21.05.2014
(73) Proprietor: Marsilli S.p.A., 26012 Castelleone (CR) (IT)
(72) Inventor: PARATI, Gian Battista, 26012 CASTELLEONE CR (IT)
(74) Representative: Modiano, Micaela Nadia

(56) References cited:
- EP-A1- 0 208 354
- EP-A1- 0 314 319
- EP-A1- 0 410 211
- US-A1- 2001 054 637
- US-A1- 2004 226 979

## Description

The present invention relates to a method and an apparatus and a terminal, the apparatus for soldering a copper wire on the terminal, particularly for soldering the end of the winding wire of electric coils on a bronze terminal.

As is known, in the production of electric coils, the ends of the copper wire wound in turns around the core of the coil, at the end of the winding process, are soldered to a corresponding terminal, usually made of bronze, which is driven into the body, generally made of plastics, of the core.

Automatic processes for soldering such terminals currently use electric arc soldering systems which provide, if managed correctly, good soldering results with sufficiently short cycle times.

In the use of such soldering systems, difficulties are encountered in being able to identify precisely the optimum spot of the terminal at which soldering is to be performed. These difficulties arise mainly from the limited precision in the positioning of the terminal with respect to the coil body. Due to the fact that the terminal is driven into the plastic body of the coil, during soldering it might be inclined or inserted to a greater or shorter extent with respect to the ideal position.

For this reason, by managing electric arc soldering according to an ideal preset position of the terminal one achieves results, in terms of soldering, that are not fully satisfactory and very often cause the rejection of the finished product during testing.

EP 0 410 211 A1 discloses a known method according to the preamble of claim 1 for soldering a copper wire on a terminal. US 2001/054637 A1 discloses an apparatus with a terminal comprising the features of the preamble of claim 7.

The aim of the present invention is to solve the problem described above by providing a method and an apparatus and a terminal, the apparatus for soldering a copper wire on the terminal, particularly for soldering the end of the winding wire of electric coils on a bronze terminal, that allow to perform soldering in a preset spot of the terminal with high precision regardless of the morphological or positional precision of the terminal.

Within this aim, an object of the invention is to devise a method and an apparatus that allow to solder copper wires to terminals with reduced and economically competitive execution times.

Another object of the invention is to devise a method and an apparatus that allow to achieve soldering of excellent quality.

A further object of the invention is to provide a method and an apparatus that also allow immediate verification of the correctness of the soldering performed.

Another object of the invention is to devise a method and an apparatus that allow to obtain soldering with minimal residual tensions, distortions and structural modifications in the elements affected by the soldering.

This aim, as well as these and other objects that will become better apparent hereinafter, are achieved by a method according to claim 1 and an apparatus and a terminal according to claim 7.

Further characteristics and advantages of the invention will become better apparent from the description of a preferred with not exclusive embodiment of the method and apparatus and terminal according to the invention, illustrated by way of nonlimiting example in the accompanying drawings, wherein:
Figure 1 is a schematic view front elevation of the apparatus and terminal according to the invention in an operating condition;
Figure 2 is a schematic front elevation view of the apparatus and terminal according to the invention in another operating condition;
Figure 3 is a schematic front elevation view of the apparatus and terminal according to the invention in a further operating condition;
Figure 4 is a schematic perspective view of the apparatus and terminal according to the invention in the operating condition of Figure 3;
Figure 5 is a schematic top plan view of the apparatus and terminal according to the invention, again in the operating condition of Figure 3;
Figure 6 is a schematic front elevation view of the apparatus and terminal according to the invention in another operating condition;
Figure 7 is a schematic enlarged-scale view of a terminal on which a wire is wound prior to soldering;
Figure 8 is a schematic view of the terminal of Figure 7 after laser soldering performed with the apparatus according to the invention.

With reference to the figures, the apparatus according to the invention, generally designated by the reference numeral 1, comprises a laser soldering device 2, which as such is adapted to emit a soldering laser beam 12 along an emission direction 3, and an optical detection device 4, which comprises a video camera 5.

The apparatus according to the invention further comprises means 6 for supporting at least one terminal 31a, 31b to which the copper wire 32 to be soldered is applied, as well as means 7 for moving the laser soldering device 2 and means 8 for moving the optical detection device 4 with respect to said supporting means 6 of the terminal 31a, 31b.

Preferably, the means 8 for moving the optical detection device 4 are the same movement means 7 of the laser soldering device 2.

The video camera 5 of the optical detection device 4 is arranged so that the axis 9a of its lens 9 is aligned with the emission direction 3 of the laser beam 12 of the laser soldering device 2.

The emission direction 3 of the laser beam 12 is perpendicular to the longitudinal extension of the terminal 31a, 31b to be soldered, which is arranged on the supporting means 6.

More particularly, the video camera 5 and the laser soldering device 2 can be installed, as shown, on a same support 10, which can move, by way of movement means of a known type, which are not described in detail for the sake of simplicity, along one or more controlled axes.

In practice, the video camera 5 and the laser soldering device 2 are moved integrally with respect to each other relative to the terminal 31a, 31b to be soldered that is arranged on the supporting means 6. The same result might be obtained by moving the terminal 31a, 31b with respect to the video camera 5 and to the laser soldering device 2.

The laser soldering device 2 comprises a laser source 11, which is adapted to emit a laser beam 12 along a first direction 13 and a deflection prism 14 which is adapted to deflect the laser beam 12 from the first direction 13 to the emission direction 3.

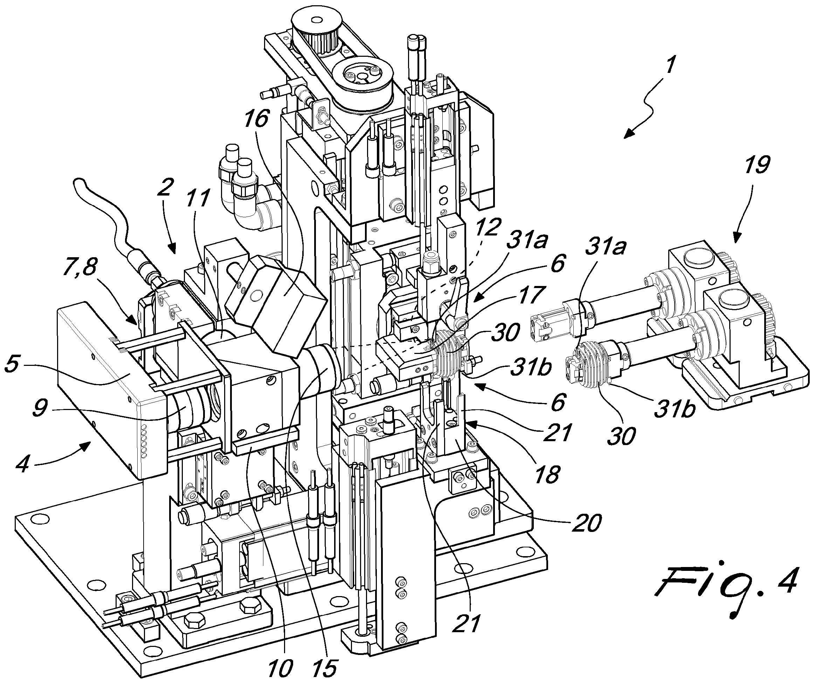

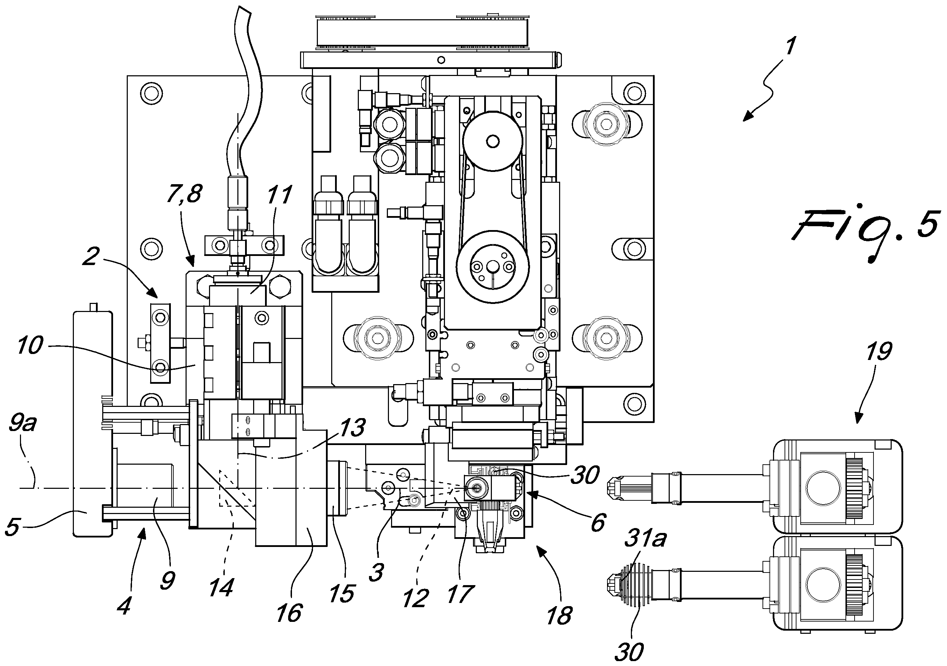

As shown in particular in Figures 4 and 5, the laser beam 12 emitted by the laser source 11 is deflected at 90° by the deflection prism 14. The video camera 5 is arranged behind the deflection prism 14, which, by way of its optical properties, is optically transparent for the video camera 5 and reflective for the laser beam 12 emitted by the laser source 11. In this manner, the lens 9 of the video camera 5 is constantly axially aligned with the emission direction 3 of the laser beam 12 that will strike the terminal 31a or 31b and can therefore identify and control with high precision the soldering spot 40.

The laser soldering device 2 is completed, in a per se known manner, by a converging lens 15, which concentrates the laser beam 12 in the soldering spot 40.

A lamp 16 is arranged on the same support 10 on which the video camera 5 and the laser soldering device 2 are mounted and is meant to illuminate the soldering area, i.e., the terminal 31a or 31b to be soldered.

The means 6 for supporting the terminal 31a, 31b, in the illustrated embodiment that refers to the soldering of the terminals 31a, 31b of an electric coil 30, comprise a block 17 on which it is possible to fit a coil 30. The block 17 can move, by way of movement means of a known type, which are not described in detail for the sake of simplicity, in order to arrange in each instance a terminal 31a or 31b of the coil 30 to be soldered in a preset initial position.

The block 17, moreover, can rotate in order to turn the coil 30 through an angle of substantially 180° in order to swap the soldered terminal 31a with a terminal 31b that is yet to be soldered, as will become better apparent hereinafter.

The apparatus according to the invention also comprises means 18 for transferring a coil 30 from a feeder or pallet 19 of a known type to the block 17. These transfer means 18 comprise a cradle element 20 with arms 21 that extend upwardly. The cradle element 20 can move on command in order to remove in each instance a coil 30 from the feeder 19 and load it onto the block 17.

The apparatus is controlled by an electronic control and actuation element, not shown, which supervises its operation according to an adapted software. In particular, the control and actuation element actuates the movement of the transfer means 18 that load and unload the coils 30 on the apparatus, the movement of the video camera 5 and of the laser soldering device 2 with respect to the terminal 31a, 31b mounted on the block 17, and the actuation of the laser soldering device 2. Moreover, the control and actuation element is adapted to receive the image of the terminal 31a or 31b that is acquired by the video camera 5 and compare it with a sample image of the terminal in order to assess the conformity of the terminal 31a or 31b that is subjected to soldering.

Operation of the apparatus according to the invention in the execution of the method according to the invention is as follows.

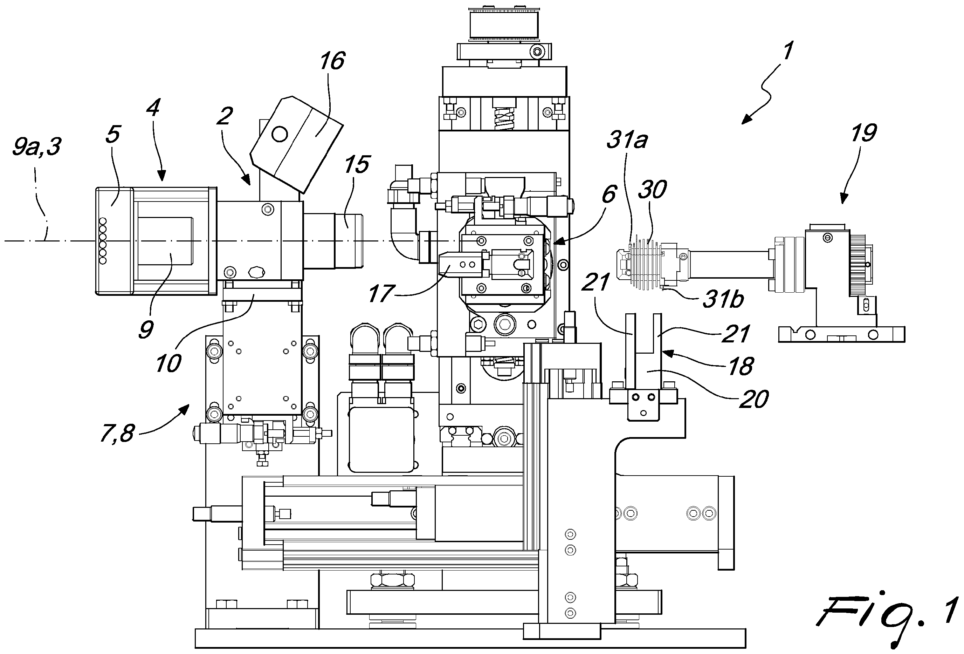

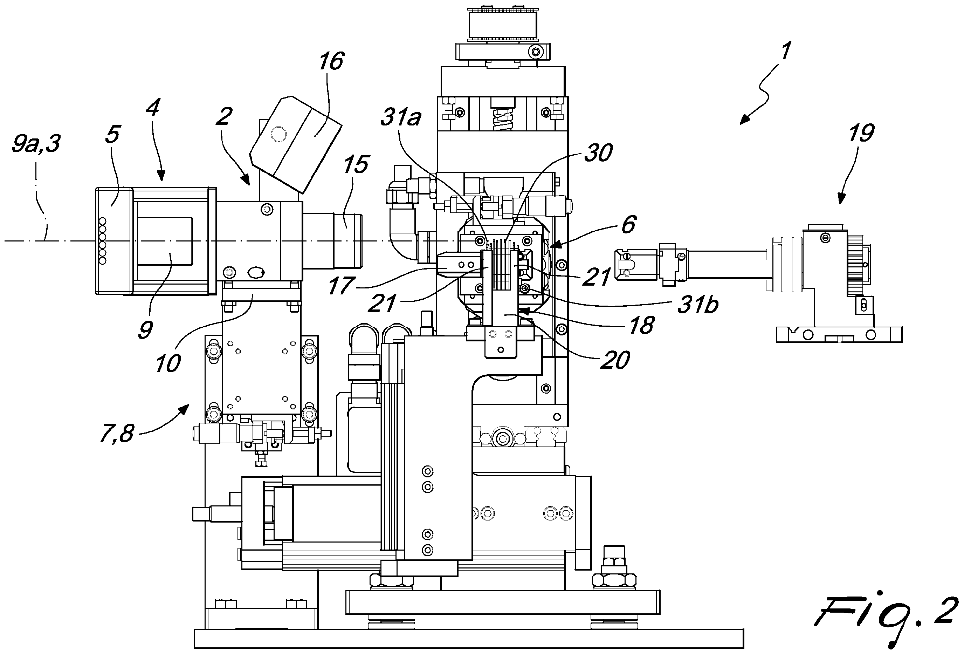

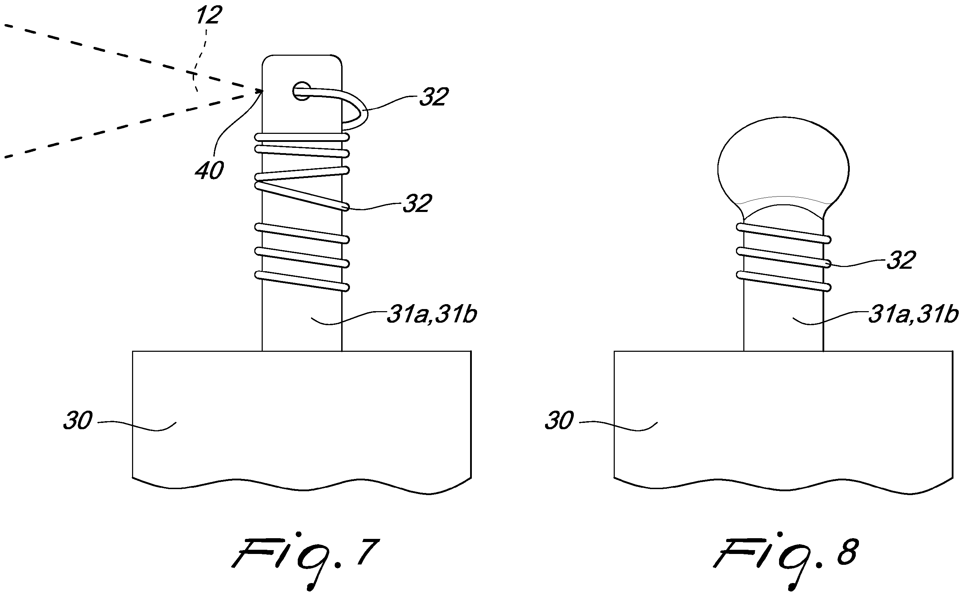

In each instance, a coil 30 with two terminals 31a, 31b to be soldered is taken from the feeder 19 and arranged on the block 17, as shown in Figures 1 and 2, in a preset initial position. In this initial position (Figure 2), one of the terminals 31a or 31b of the coil 30 (the terminal 31a in the illustrated case), constituted by an elongated pin that is driven into the body of said coil 30, is arranged so that its longitudinal axis is vertical and is directed so that its free end is upward. One end of the copper wire 32 used to perform the winding of the coil 30 is wound by means of a few turns around the terminal 31a, 31b, as shown in Figure 7.

At this point, the video camera 5 and the laser soldering device 2 are moved with respect to the terminal 31a by means of an adapted software, so that the video camera 5 inspects the terminal 31a to be soldered and acquires its image, which is sent to the control and actuation element that supervises the operation of the apparatus. The control and actuation element compares the image acquired by the video camera 5 with a sample image. If the terminal 31a has such anomalies with respect to the sample image as to place the terminal 31a outside a preset tolerance range, the soldering cycle is interrupted and the coil 30 is unloaded from the apparatus and rejected. If the terminal 31a is instead acceptable since it is within the preset tolerance range, the video camera 5 identifies precisely an intermediate point of the extension of the terminal 31a that will constitute the optimum soldering spot 40.

It should be noted in fact that if the soldering spot were preselected proximate to the end of the terminal that is driven into the plastic body of the coil 30, soldering problems might occur due to the presence of plastic residues. If instead the soldering spot were preselected proximate to the opposite end, i.e., proximate to the free end of the terminal, problems in engagement of the wire 32 and problems in engaging the terminal if it is bent and/or deformed would occur.

It should also be noted that with the particular placement of the terminal 31a so that its longitudinal axis is vertical and of the video camera 5 so that the axis 9a of its lens 9 is horizontal allows the video camera 5 to acquire the image of the terminal 31a without interference, to verify its conformity and to provide the clearance for the subsequent soldering step.

The arrangement of the axis 9a of the lens 9 of the video camera 5 at the preset soldering spot 40 also achieves the correct pointing of the laser soldering device 2, since the axis 9a of the lens 9 of the video camera 5 is aligned with the emission direction 3 of the laser beam 12.

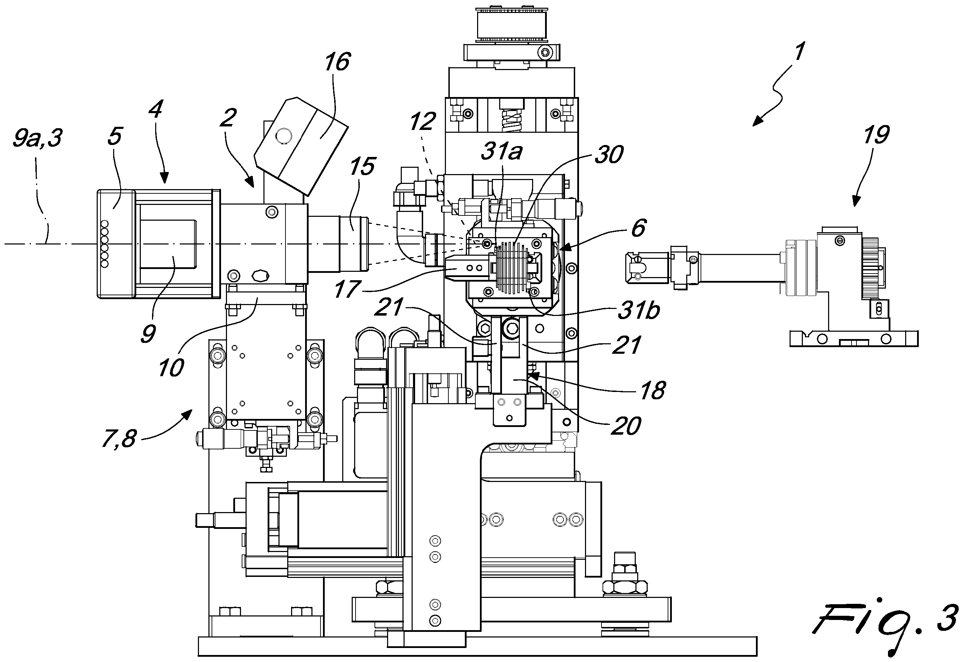

At this point, the lens 9 of the video camera 5 is closed and the laser soldering device 2 is activated, emitting a laser beam 12 (Figures 3, 4, 5), which partially melts the wire 32 and the terminal 31a at the preset soldering spot 40, providing their joining.

Figure 8 shows the results of the soldering thus performed.

The result of the soldering performed is checked by means of the video camera 5 and, if the soldering is unsatisfactory, the coil 30 is unloaded from the apparatus and rejected.

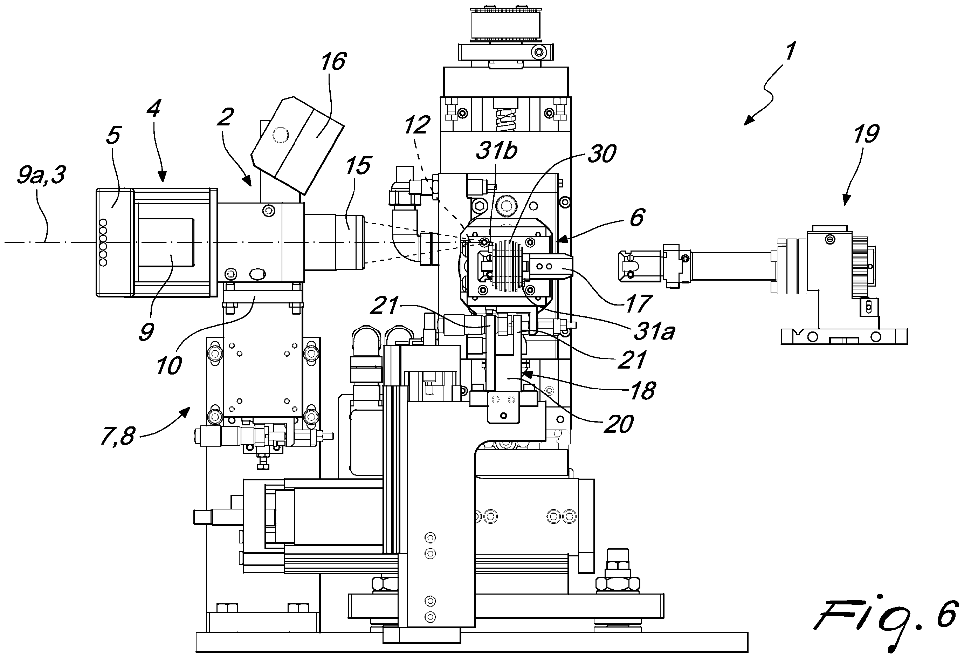

The block 17 is then rotated so as to swap the position of the already soldered terminal 31a with the terminal 31b that is yet to be soldered and the same operations performed on the first terminal 31a are repeated in order to solder also the second terminal 31b (Figure 6).

After soldering the terminal 31b as well, the coil 30 is unloaded from the apparatus and replaced with a new coil 30 to be soldered.

In practice it has been found that the apparatus and the method according to the invention achieve fully the intended aim, since they allow to perform soldering in a preset point of the terminal with high precision regardless of the morphological or positional precision of the terminal and ensure a soldering quality that is at least equal to that which can be obtained with electric arc soldering.

A further advantage of the invention is to be able to identify any anomalies of the terminal and to proceed with its rejection before performing soldering.

The method and the apparatus thus conceived are susceptible of numerous modifications and variations, all of which are within the scope of the appended claims; all the details may further be replaced with other technically equivalent elements.

In practice, the materials used, as well as the dimensions, may be any according to requirements and to the state of the art.

## Claims

1. A method for soldering a copper wire on a terminal, particularly for soldering the end of the winding wire of electric coils on a bronze terminal, comprising the step of:
- arranging, in a preset initial position, the terminal (31a or 31b), with the copper wire (32) to be soldered applied thereto;
**characterized in that** the method further comprises the steps of:
- detecting, by means of an optical detection device (4), the soldering spot (40) on said terminal (31a or 31b) at which the soldering is to be performed;
- pointing a laser soldering device (2), in which the emission direction (3) of a laser beam (12) is arranged at said soldering spot (40);
- emitting the laser beam (12) along said emission direction (3) for the partial melting of said copper wire (32) and of said terminal (31a or 31b) at said soldering spot (40);
said optical detection device (4) comprising a video camera (5); said video camera (5) being arranged so that the axis (9a) of its lens (9) is aligned with said emission direction (3); said direction of emission (3) of the laser beam (12) being substantially perpendicular to the longitudinal extension of said terminal (31a or 31b).

2. The method according to claim 1, **characterized in that** after said step of emitting the laser beam (12), a step is performed to verify the result of the soldering by means of an optical detection device (4).

3. The method according to claim 1 and/or 2, **characterized in that** said verification step is performed by means of said video camera (5).

4. The method according to one or more of the preceding claims, **characterized in that** said detection step and said pointing step are performed simultaneously, moving said optical detection device (4) and said laser soldering device (2) with respect to said terminal (31a or 31b) or vice versa.

5. The method according to one or more of the preceding claims, **characterized in that** said soldering spot (40) is defined in an intermediate region of the longitudinal extension of said terminal (31a or 31b).

6. The method according to one or more of the preceding claims, **characterized in that** in said preset initial position, said terminal (31a or 31b) is arranged so that its longitudinal axis is vertical, said emission direction (3) of the laser beam (12) being aligned with the axis (9a) of the lens (9) of said video camera (5) and being oriented horizontally.

7. An apparatus and a terminal, the apparatus for soldering a copper wire on the terminal, particularly for soldering the end of the winding wire of electric coils on a bronze terminal, comprising :
- a laser soldering device (2), adapted to emit a laser beam (12) for soldering along an emission direction (3);
- an optical detection device (4);
- means (6) for supporting at least one terminal (31a, 31b) to which the wire (32) to be soldered is applied;
- means (7) for moving said laser soldering device (2) with respect to said supporting means (6) or vice versa;
- means (8) for moving said optical detection device (4) with respect to said supporting means (6) or vice versa;
said apparatus being **characterized in that** said optical detection device (4) comprises a video camera (5); said video camera (5) is arranged so that the axis (9a) of its lens (9) is aligned with said emission direction (3); said emission direction (3) is substantially perpendicular to the longitudinal extension of said terminal (31a or 31b) on said supporting means (6).

8. The apparatus according to claim 7, **characterized in that** said movement means (8) of said optical detection device (4) are constituted by said means (7) for moving said laser soldering device (2).

9. The apparatus according to one or more of claims 7-8, **characterized in that** said laser soldering device (2) comprises a laser source (11) adapted to emit a laser beam (12) along a first direction (13) and a deflector prism (14) that is adapted to deflect the laser beam (12) from said first direction (13) to said emission direction (3).

10. The apparatus according to one or more of claims 7-9, **characterized in that** said video camera (5) is arranged to the rear of said deflector prism (14), said deflector prism (14) being optically transparent for said video camera (5) and being reflective for the laser beam (12) emitted by said laser source (11).

## Patentansprüche

1. Ein Verfahren zum Löten eines Kupferdrahtes an einen Anschluss, insbesondere zum Löten des Endes des Wickeldrahts von elektrischen Spulen an einen Bronzeanschluss; das folgenden Schritt umfasst:
- das Anordnen des Anschlusses (31a oder 31b) in einer vordefinierten Ausgangsposition, wobei der zu lötende Kupferdraht (32) daran angelegt ist;
**dadurch gekennzeichnet, dass** das Verfahren weiter folgende Schritte umfasst:
- das Erfassen, mit Hilfe einer optischen Erkennungsvorrichtung (4), der Lötstelle (40) an dem Anschluss (31a oder 31b), an dem der Lötvorgang durchgeführt werden soll;
- das Richten einer Laserlötvorrichtung (2), wobei die Emissionsrichtung (3) eines Laserstrahls (12) an der Lötstelle (40) angeordnet ist;
- das Emittieren des Laserstrahls (12) entlang der Emissionsrichtung (3) zum partiellen Schmelzen des Kupferdrahts (32) und des Anschlusses (31a oder 31b) an der Lötstelle (40);
wobei die optische Erkennungsvorrichtung (4) eine Videokamera (5) umfasst; wobei die Videokamera (5) so angeordnet ist, dass die Achse (9a) ihrer Linse (9) mit der Emissionsrichtung (3) ausgerichtet ist; wobei die Emissionsrichtung (3) des Laserstrahls (12) im Wesentlichen senkrecht zur Längsausdehnung des Anschlusses (31a oder 31b) ist.

2. Das Verfahren gemäß Anspruch 1, **dadurch gekennzeichnet, dass** nach dem Schritt des Emittierens des Laserstrahls (12) ein Schritt durchgeführt wird, um das Ergebnis des Lötvorgangs mit Hilfe einer optischen Erkennungsvorrichtung (4) zu überprüfen.

3. Das Verfahren gemäß Anspruch 1 und/oder 2, **dadurch gekennzeichnet, dass** der Überprüfungsschritt mit Hilfe der Videokamera (5) vorgenommen wird.

4. Das Verfahren gemäß einem oder mehreren der obigen Ansprüche, **dadurch gekennzeichnet, dass** der Schritt des Erkennens und der Schritt des Richtens gleichzeitig durchgeführt werden, wobei die optische Erkennungsvorrichtung (4) und die Laserlötvorrichtung (2) im Verhältnis zu dem Anschluss (31a oder 31b) bewegt werden oder umgekehrt.

5. Das Verfahren gemäß einem oder mehreren der obigen Ansprüche, **dadurch gekennzeichnet, dass** die Lötstelle (40) in einem intermediären Bereich der Längsausdehnung des Anschlusses (31a oder 31b) bestimmt ist.

6. Das Verfahren gemäß einem oder mehreren der obigen Ansprüche, **dadurch gekennzeichnet, dass** in der vordefinierten Ausgangsposition der Anschluss (31a oder 31b) so angeordnet ist, dass seine Längsachse vertikal ist, wobei die Emissionsrichtung (3) des Laserstrahls (12) mit der Achse (9a) der Linse (9) der Videokamera (5) und horizontal ausgerichtet ist.

7. Eine Vorrichtung und ein Anschluss, wobei die Vorrichtung zum Löten eines Kupferdrahts an den Anschluss, insbesondere zum Löten des Endes des Wickeldrahts von elektrischen Spulen an einen Bronzeanschluss, dient; Folgendes umfassend:
- eine Laserlötvorrichtung (2), ausgebildet, um einen Laserstrahl (12) zum Löten entlang einer Emissionsrichtung (3) zu emittieren;
- eine optische Erkennungsvorrichtung (4);
- Mittel (6) zum Tragen mindestens eines Anschlusses (31a, 31b), an dem der zu lötende Draht (32) angebracht wird;
- Mittel (7) zum Bewegen der Laserlötvorrichtung (2) im Verhältnis zu den tragenden Mitteln (6) oder umgekehrt;
- Mittel (8) zum Bewegen der optischen Erkennungsvorrichtung (4) im Verhältnis zu den tragenden Mitteln (6) oder umgekehrt;
wobei die Vorrichtung **dadurch gekennzeichnet ist, dass** die optische Erkennungsvorrichtung (4) eine Videokamera (5) umfasst; die Videokamera (5) ist so angeordnet, dass die Achse (9a) ihrer Linse (9) mit der Emissionsrichtung (3) angeordnet ist; die Emissionsrichtung (3) ist im Wesentlichen senkrecht zur Längsausdehnung des Anschlusses (31a oder 31b) an den tragenden Mitteln (6).

8. Die Vorrichtung gemäß Anspruch 7, **dadurch gekennzeichnet, dass** die Bewegungsmittel (8) der optischen Erkennungsvorrichtung (4) aus den Mitteln (7) zum Bewegen der Laserlötvorrichtung (2) bestehen.

9. Die Vorrichtung gemäß einem oder mehreren der Ansprüche 7-8, **dadurch gekennzeichnet, dass** die Laserlötvorrichtung (2) eine Laserquelle (11) umfasst, die ausgebildet ist, um einen Laserstrahl (12) entlang einer ersten Richtung (13) auszusenden, und ein Ablenkprisma (14), das ausgebildet ist, um den Laserstrahl (12) aus der ersten Richtung (13) in die Emissionsrichtung (3) umzulenken.

10. Die Vorrichtung gemäß einem oder mehreren der Ansprüche 7-9, **dadurch gekennzeichnet, dass** die Videokamera (5) am hinteren Ende des Ablenkprismas (14) angeordnet ist; wobei das Ablenkprisma (14) optisch durchlässig für die Videokamera (5) und reflektierend für den Laserstrahl (12) ist, der von der Laserquelle (11) ausgesendet wird.

## Revendications

1. Procédé pour souder un fil de cuivre sur une borne, en particulier pour souder l'extrémité du fil de bobinage de bobines électriques sur une borne en bronze, comportant l'étape consistant à :
- agencer, dans une position initiale préétablie, la borne (31a ou 31b), avec le fil de cuivre (32) à souder appliqué sur celle-ci,
**caractérisé en ce que** le procédé comporte en outre les étapes consistant à :
- détecter, au moyen d'un dispositif de détection optique (4), le point de soudure (40) sur ladite borne (31a ou 31b) au niveau duquel la soudure doit être réalisée,
- pointer un dispositif de soudage au laser (2), dans lequel la direction d'émission (3) d'un faisceau laser (12) est agencée sur ledit point de soudure (40),
- émettre le faisceau laser (12) le long de ladite direction d'émission (3) pour la fusion partielle dudit fil de cuivre (32) et de ladite borne (31a ou 31b) sur ledit point de soudure (40),
ledit dispositif de détection optique (4) comportant une caméra vidéo (5), ladite caméra vidéo (5) étant agencée de sorte que l'axe (9a) de sa lentille (9) est aligné avec ladite direction d'émission (3), ladite direction d'émission (3) du faisceau laser (12) étant sensiblement perpendiculaire à l'extension longitudinale de ladite borne (31a ou 31b).

2. Procédé selon la revendication 1, **caractérisé en ce qu'**après ladite étape d'émission du faisceau laser (12), une étape est réalisée pour vérifier le résultat du soudage au moyen d'un dispositif de détection optique (4).

3. Procédé selon la revendication 1 et/ou 2, **caractérisé en ce que** ladite étape de vérification est réalisée au moyen de ladite caméra vidéo (5).

4. Procédé selon une ou plusieurs des revendications précédentes, **caractérisé en ce que** ladite étape de détection et ladite étape de pointage sont réalisées simultanément, en déplaçant ledit dispositif de détection optique (4) et ledit dispositif de soudage au laser (2) par rapport à ladite borne (31a ou 33b) ou vice versa.

5. Procédé selon une ou plusieurs des revendications précédentes, **caractérisé en ce que** ledit point de soudure (40) est défini dans une zone intermédiaire de l'extension longitudinale de ladite borne (31a ou 31b).

6. Procédé selon une ou plusieurs des revendications précédentes, **caractérisé en ce que** dans ladite position initiale préétablie, ladite borne (31a ou 31b) est agencée de sorte que son axe longitudinal est vertical, ladite direction d'émission (3) du faisceau laser (12) étant alignée avec l'axe (9a) de la lentille (9) de ladite caméra vidéo (5) et étant orientée horizontalement.

7. Appareil et borne, l'appareil étant destiné à souder un fil de cuivre sur la borne, en particulier pour souder l'extrémité du fil de bobinage de bobines électriques sur une borne en bronze, comportant :
- un dispositif de soudage au laser (2), adapté pour émettre un faisceau laser (12) pour souder le long d'une direction d'émission (3),
- un dispositif de détection optique (4),
- des moyens (6) pour supporter au moins une borne (31a, 31b) sur laquelle le fil (32) à souder est appliqué,
- des moyens (7) pour déplacer ledit dispositif de soudage au laser (2) par rapport auxdits moyens de support (6) ou vice versa,
- des moyens (8) pour déplacer ledit dispositif de détection optique (4) par rapport auxdits moyens de support (6) ou vice versa,
ledit appareil étant **caractérisé en ce que** ledit dispositif de détection optique (4) comporte une caméra vidéo (5), ladite caméra vidéo (5) est agencée de sorte que l'axe (9a) de sa lentille (9) est aligné avec ladite direction d'émission (3), ladite direction d'émission (3) est sensiblement perpendiculaire à l'extension longitudinale de ladite borne (31a ou 31b) sur lesdits moyens de support (6).

8. Appareil selon la revendication 7, **caractérisé en ce que** lesdits moyens de déplacement (8) dudit dispositif de détection optique (4) sont constitués desdits moyens (7) de déplacement dudit dispositif de soudage au laser (2).

9. Appareil selon une ou plusieurs des revendications 7 à 8, **caractérisé en ce que** ledit dispositif de soudage au laser (2) comporte une source laser (11) adaptée pour émettre un faisceau laser (12) le long d'une première direction (13) et un prisme déflecteur (14) qui est adapté pour dévier le faisceau laser (12) de ladite première direction (13) vers ladite direction d'émission (3) .

10. Appareil selon une ou plusieurs des revendications 7 à 9, **caractérisé en ce que** ladite caméra vidéo (5) est agencée à l'arrière dudit prisme déflecteur (14), ledit prisme déflecteur (14) étant optiquement transparent pour ladite caméra vidéo (5) et étant réfléchissant pour le faisceau laser (12) émis par ladite source laser (11).
